# EUROPÄISCHE PATENTSCHRIFT

(11) **EP 0 458 181 B1**
(45) Veröffentlichungstag und Bekanntmachung des Hinweises auf die Patenterteilung: **04.05.1994**
(21) Anmeldenummer: 91107866.5
(22) Anmeldetag: 15.05.1991
(51) Int. Cl.: B23K 26/14

(54) **Düse zum Laserstrahlschweissen oder Laserstrahlschneiden**
Nozzle for laser welding or cutting
Buse pour le soudage ou le coupage par laser

(30) Priorität: 19.05.1990 DE 4016200
(43) Veröffentlichungstag der Anmeldung: 27.11.1991
(73) Patentinhaber: Linde Aktiengesellschaft, 65189 Wiesbaden (DE)
(72) Erfinder: Mair, Hermann, Dipl.-Ing., W-8000 München 90 (DE); Herrmann, Johann, W-8044 Unterschleissheim (DE)
(74) Vertreter: Schaefer, Gerhard, Dr.

(56) Entgegenhaltungen:
- PATENT ABSTRACTS OF JAPAN vol. 11, no. 74 (M-568)(2521) 6. März 1987 & JP-A-61 229 491 (MITSUBISHI ELECTRIC CORP) 13 Oktober 1986

## Beschreibung

Die Erfindung betrifft eine Düse zum Laserstrahlschweißen oder Laserstrahlschneiden mit einem zentral angeordneten Düsenkanal, durch den ein Laserstrahl und ein Gasstrahl geführt werden.

Bei der Bearbeitung von Werkstücken mit Laserstrahlen wird durch eine Fokussierlinse der Laserstrahl auf die Werkstückoberfläche gebündelt, wodurch die zum Schweißen oder Schneiden erforderliche Erwärmung erzielt wird. Zusätzlich wird ein Gasstrahl aus Schutzgas oder Schneidgas gegen die zu bearbeitende Werkstückoberfläche geleitet. Der fokussierte Laserstrahl und der Gasstrahl werden dabei gemeinsam durch eine Düse geführt. Die bei dieser Bearbeitung erzielten Ergebnisse weisen jedoch nicht immer die gewünschte optimale Qualität auf.

Aus der JP-A-61-22 94 91 ist eine Düse zum Laserstrahlschweißen mit einem zentral angeordneten Düsenkanal bekannt, durch den die Laserstrahlung und ein Plasma entfernendes Inertgas geführt werden. Der zentral angeordnete Düsenkanal ist koaxial von einem zweiten Düsenkanal für ein Schutzgas umgeben. In diesen zweiten Düsenkanal für das Schutzgas ist ein Filter unmittelbar nach der Zuleitung für das Schutzgas in die Düse eingebaut.

Der Erfindung liegt die Aufgabe zugrunde, eine Vorrichtung der obengenannten Art aufzuzeigen, welche eine Verbesserung der Qualität bei der Bearbeitung eines Werkstückes beim Laserstrahlschweißen oder Laserstrahlschneiden gewährleistet.

Diese Aufgabe wird erfindungsgemäß dadurch gelöst, daß in den Düsenkopf am Austrittsende des Düsenkanals ein ringförmiges, gasdurchlässiges Sintermaterial- oder Siebpaket koaxial eingebaut ist.

Dadurch, daß das Sintermaterial- oder Siebpaket Ringform besitzt und in der Achsmitte offen ist, kann einerseits der Laserstrahl ungehindert durch den Düsenkopf mit dem Sintermaterial- oder Siebpaket treten, andererseits wird durch das gasdurchlässige Sintermaterial- oder Siebpaket aber der Strömungscharakter des Gasstrahles beeinflußt. Die Gasströmung gleicht nach dem Verlassen der erfindungsgemäßen Düse einer laminaren Strömung mit dem charakterisitischen Abfall der Strömungsgeschwindigkeit des Gases von der Strömungsmitte bis in den Randbereich der Strömung. Vorteilhaft gegenüber einer herkömmlichen Düse nach dem Stand der Technik ist ein durch die veränderte Gasströmung bewirkter, verbesserter Schutz des aufgeschmolzenen Materials vor der umgebenden Luft. Sowohl beim Laserstrahlschweißen als auch beim Laserstrahlschneiden läßt sich somit wirkungsvoll eine Oxidation der Werkstückoberfläche vermeiden. Durch die geringere Gasaustrittsgeschwindigkeit des Gasstrahls nach Verlassen der Düse wird beim Laserstrahlschweißen der Druck auf das entstehende Schmelzbad verringert. Damit wird verhindert, daß das Schmelzbad durchgedrückt wird. Außerdem werden Fokussierlinse, eventuell eingesetzte Spiegel oder andere optische Bauteile wirkungsvoll geschützt, da darüber hinaus die Strömungsgeschwindigkeit des Gasstrahls innerhalb des Düsenkanals einer erfindungsgemäßen Düse gegenüber der einer herkömmlichen Düse vergrößert werden kann.

Mit der erfindungsgemäßen Vorrichtung läßt sich also eine wesentliche Verbesserung beim Laserstrahlschweißen und Laserstrahlschneiden erreichen. Besondere Vorteile lassen sich beim Laserstrahlschweißen empfindlicher Materialien wie beispielsweise Titan oder Aluminium erzielen. Das Sintermaterial besteht bei der erfindungsgemäßen Düse aus Metall oder Keramik. Eine besonders vorteilhafte Ausgestaltung der erfindungsgemäßen Düse sieht zusätzlich zum zentral angeordneten Düsenkanal einen oder mehrerere Kanäle in der Düse vor, die zu dem am Düsenkopf befindlichen Sintermaterial- oder Siebpaket führen. Damit wird das oben beschriebene laminare Strömungsprofil des Gasstrahls fein regulierbar. Ferner bietet sich die Möglichkeit, durch den oder die zusätzlichen Gaskanäle ein anderes Gas oder Gasgemisch als durch den zentral angeordneten Düsenkanal zu leiten. So kann eine Reduktion der Plasmabildung mit dem Einsatz von plasmareduzierendem Schutzgas wie beispielsweise Helium durch den zentral angeordneten Düsenkanal sichergestellt werden, während durch den oder die zusätzlichen Kanäle ein preiswerteres Schutzgas geleitet werden kann. Das bedeutet eine besonders kostengünstige Reduktion der Plasmabildung bei hoher Effizienz. Wenn durch den oder die Zusatzkanäle Kaltgas gepumpt wird, bedeutet das zusätzlich auch eine Kühlung der Düse während des Bearbeitungsprozesses.

Eine durch den oder die zusätzlichen Kanäle erzeugte Strömung mit einem zur zentralen Gasströmung symmetrisch ausgebildeten Strömungsprofil ist besonders vorteilhaft und damit erstrebenswert.

Durch zwei spezielle erfindungsgemäße Ausführungsformen kann man diese Symmetrie erreichen: Entweder durch einen rotationssymmetrisch zur Düsenachse verlaufenden Ringkanal, der den zentralen Düsenkanal koaxial umgibt, oder durch mehrere symmetrisch zum zentralen Düsenkanal verlaufende einzelne Kanäle, die miteinander verbunden oder völlig getrennt sein können.

Die Erfindung sei im folgenden anhand zweier Ausführungsbeispiele näher erläutert.

Hierbei zeigen:
- Figur 1: eine erfindungsgemäße Düse einfacher Bauform und
- Figur 2: eine erfindungsgemäße Düse mit zusätzlichem Ringkanal.

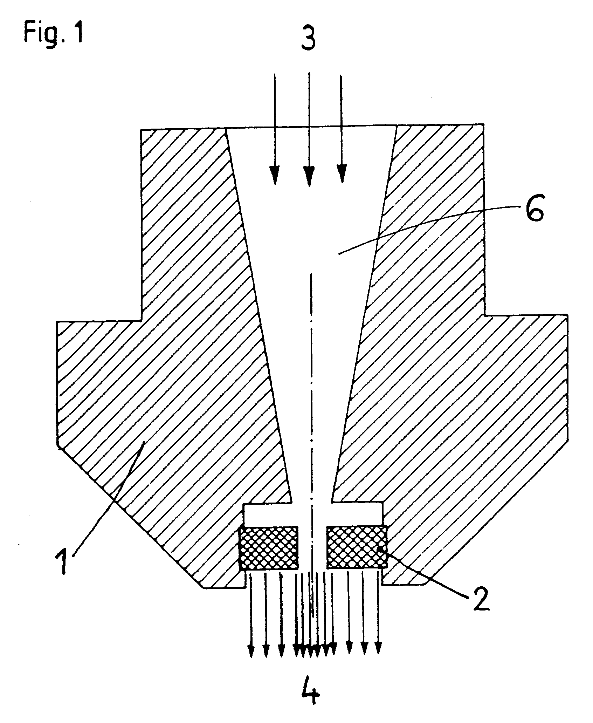

In Figur 1 ist eine erfindungsgemäße Düse 1 mit einem im Düsenkopf eingebauten ringförmigen Sintermaterial- oder Siebpacket 2 dargestellt.Schutz- oder Schneidgas 3 wird durch einen zentral angeordneten Düsenkanal 6 gepumpt und weist nach dem Austritt aus der Düse ein in etwa laminares Strömungsprofil 4 auf.

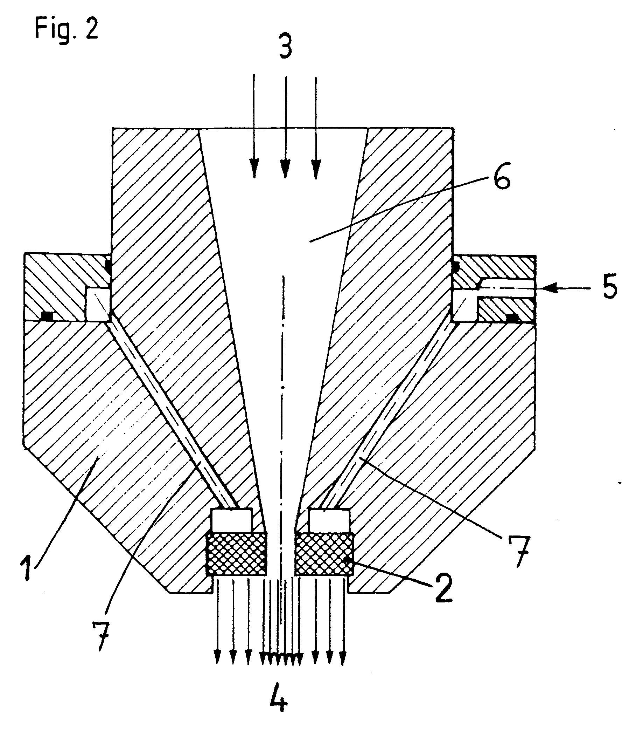

Figur 2 zeigt eine erfindungsgemäße Düse mit zu Figur 1 identischen Bezugsziffern 1 bis 4 und 6. Zusätzlich ist hier aber ein zur Düsenachse rotationssymmetrisch verlaufender Ringkanal 7 vorhanden, durch den zusätzliches Gas 5 geleitet werden kann.

## Patentansprüche

1. Düse (1) zum Laserstrahlschweißen oder Laserstrahlschneiden mit einem zentral angeordneten Düsenkanal (6), durch den ein Laserstrahl und ein Gasstrahl geführt werden, **dadurch** **gekennzeichnet,** daß in den Düsenkopf(l) am Austrittsende des Düsenkanals (6) ein ringförmiges, gasdurchlässiges Sintermaterial- oder Siebpaket (2) koaxial eingebaut ist.

2. Düse nach Anspruch 1, dadurch gekennzeichnet, daß in der Düse (1) zusätzlich zum zentral verlaufenden Düsenkanal (6) ein oder mehrere Kanäle (7) vorhanden sind, die zum Sintermaterial- oder Siebpaket (2) führen.

3. Düse nach Anspruch 2, dadurch gekennzeichnet, daß ein den zentral verlaufender Düsenkanal (6) koaxial umgebender, ringförmiger Kanal (7) zum Sintermaterial- oder Siebpaket führt.

4. Düse nach Anspruch 2, dadurch gekennzeichnet, daß mehrere um den zentral verlaufenden Düsenkanal (6) symmetrisch angeordnete Kanäle zum Sintermaterial- oder Siebpaket (2) führen.

## Claims

1. Nozzle (1) for laser welding or laser cutting with a centrally disposed nozzle channel (6) through which a laser beam and a stream of gas are passed, characterised in that an annular, gas-permeable sintered material or filter block (2) is fitted coaxially in the nozzle head (1) at the outlet end of the nozzle channel (6).

2. Nozzle according to claim 1, characterised in that one or more channels (7) which lead to the sintered material or filter block (2) are provided in the nozzle (1) in addition to the nozzle channel (6) running centrally.

3. Nozzle according to claim 2, characterised in that an annular channel (7) coaxially surrounding the nozzle channel (6) running centrally leads to the sintered material or filter block.

4. Nozzle according to claim 2, characterised in that a plurality of channels disposed symmetrically about the nozzle channel (6) running centrally lead to the sintered material or filter block (2).

## Revendications

1. Buse pour le soudage ou la découpe à faisceau laser avec un canal de buse disposé centralement (6) et parcouru par un faisceau laser et un jet de gaz, caractérisé en ce qu'une plaquette poreuse ou en matériau fritté perméable au gaz et de forme annulaire (2) est installée coaxialement dans la buse (1) à l'extrémité de sortie du canal de buse (6).

2. Buse selon la revendication 1, caractérisée en ce que, dans la buse (1), à part le canal de buse disposé centralement (6), un ou plusieurs canaux (7) sont présents qui mènent à la plaquette poreuse ou en matériau fritté (2).

3. Buse selon la revendication 2, caractérisée en ce qu'un canal annulaire (7) entourant coaxialement le canal de buse disposé centralement (6), mène à la plaquette poreuse en matériau fritté.

4. Buse selon la revendication 2, caractérisée en ce que plusieurs canaux agencés symétriquement autour du canal de buse disposé centralement 6, mènent à la plaquette poreuse ou en matériau fritté (2).
